# EUROPÄISCHE PATENTANMELDUNG

(11) **EP 0 633 495 A1**
(43) Veröffentlichungstag der Anmeldung: **11.01.1995**
(21) Anmeldenummer: 94109621.6
(22) Anmeldetag: 22.06.1994
(51) Int. Cl.: G03C 1/29, G03C 1/18, C09B 23/06

(54) **Spektral sensibilisiertes fotografisches Aufzeichnungsmaterial**

(30) Priorität: 05.07.1993 DE 4322302
(71) Anmelder: Agfa-Gevaert AG, D-51373 Leverkusen (DE)
(72) Erfinder: Missfeldt, Michael, Dr., D-51427 Bergisch Gladbach (DE)

(57) **Zusammenfassung**

Ein fotografisches Aufzeichnungsmaterial mit einer lichtempfindlichen Silberhalogeridemulsionsschicht, die mit einem Sensibilisierungsfarbstoff einer der Formeln I und II spektral sensibilisiert ist 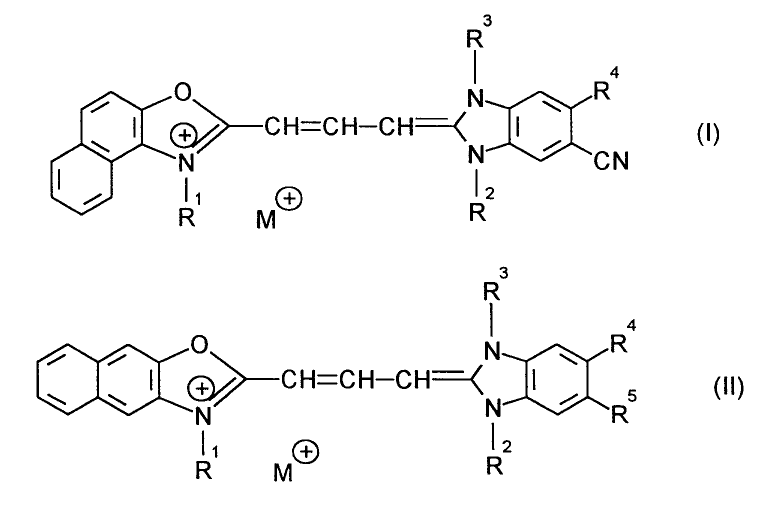
worin bedeuten
- R¹, R²: Sulfoalkyl;
- R³: Alkyl;
- R⁴: H, F, CL, -CN, Alkoxycarbonyl, Carbamoyl;
- R⁵: Cl, -CN;
- M^{⊕}: ein gegebenenfalls zum Ladungsausgleich erforderliches Gegenion (Kation)
weist eine hohe und gegen feucht-warme Bedingungen stabile Empfindlichkeit auf.

## Beschreibung

Die Erfindung betrifft ein fotografisches Aufzeichnungsmaterial mit mindestens einer lichtempfindlichen Silberhalogenidemulsionsschicht, die mit einem neuen einen Naphthoxazolkern und einen Benzimidazolkern enthaltenden Carbocyaninfarbstoff für den grünen Spektralbereich sensibilisiert ist.

Cyaninfarbstoffe mit anellierten Azolen als Donor- bzw. Akzeptorgruppen haben sich als gute spektrale Sensibilisatoren für lichtempfindliches Silberhalogenid enthaltende Aufzeichnungsmaterialien bewährt.

Für den grünen Spektralbereich sind hier besonders Bezoxazol, Naphthoxazol und Benzimidazol enthaltende Trimethincyanine zu erwähnen.

Benzoxazoltrimethine sind zwar fotografisch interessante Sensibilisatoren, können die Empfindlichkeitsanforderungen aber nicht immer erfüllen.

Naphthoxazol- und Benzimidazoltrimethine führen häufig zu hoher Empfindlichkeit, sind aber wegen ihrer langwelligen Sensibilisierungsmaxima hinsichtlich der Farbwiedergabe unvorteilhaft.

Unsymmetrische Benzoxol/Benzimidazol-Trimethine sind bekannte in der Literatur erwähnte Cyanine, hingegen wird über Naphthoxazol/Benzimidazol-Trimethincyanine nur wenig berichtet und wenn, dann meist über solche mit betainischer Struktur.

Systematische Untersuchungen der Bissulfoalkylderivate dieser Cyaninklasse förderte erstaunliche Resultate zu Tage:
Führen die beiden bisher bekannten Vertreter dieser Stoffklasse (JP 60-108 838 Farbstoff III-A, JP 60-128 433 Farbstoff III-1), deren Benzimidazolring in 5-Stellung mit Chlor und in 6-Stellung mit -CF₃ bzw. Chlor substituiert ist, schon zu ordentlichen Empfindlichkeiten, so erhält man durch Änderung des Substitutionsmusters am Benzimidazol (siehe allgemeine Formel I und Tabelle 1) zu überragenden Empfindlichkeitswerten führende Spektralsensibilisatoren.

Gegenstand der Erfindung ist ein lichtempfindliches fotografisches Aufzeichnungsmaterial mit mindestens einer lichtempfindlichen Silberhalogenidemulsionsschicht, die mit einem einen Naphthoxazolkern und einen Benzimidazolkern enthaltenden Carbocyaninfarbstoff spektral sensibilisiert ist, dadurch gekennzeichnet, daß die Silberhalogenidemulsionsschicht mit mindestens einem Sensibilisierungsfarbstoff einer der Formeln I und II spektral sensibilisiert ist 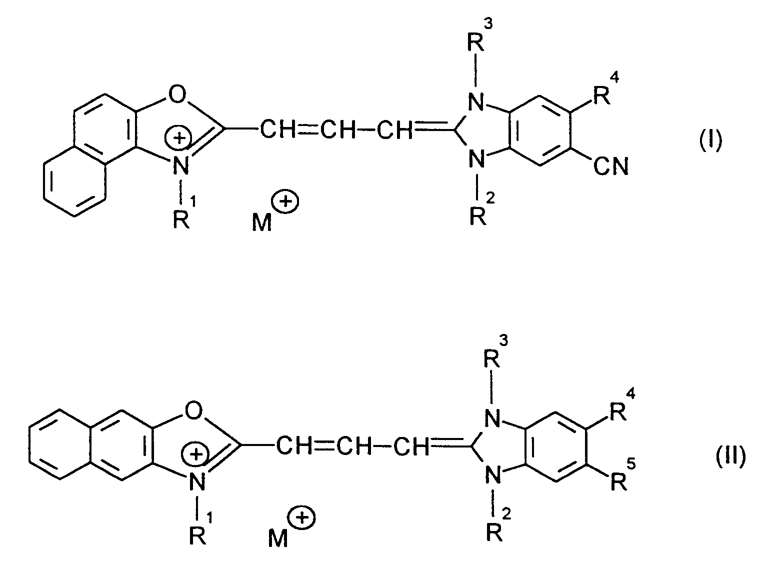
worin bedeuten
- R¹, R²: Sulfoalkyl;
- R³: Alkyl;
- R⁴: H, F, Cl, -CN, Alkoxycarbonyl, Carbamoyl;
- R⁵: Cl, -CN;
- M^{⊕}: ein gegebenenfalls zum Ladungsausgleich erforderliches Gegenion (Kation).

Eine durch R¹ oder R² dargestellte Sulfoalkylgruppe enthält vorzugsweise 1-4 C-Atome und kann weitere Substituenten enthalten, z.B. -OH, Halogen; sie kann auch eine Doppelbindung enthalten.

Beispiele sind Sulfoethyl, Sulfopropyl, Sulfobutyl, 3-Methylsulfobutyl.

Eine durch R³ dargestellte Alkylgruppe enthält vorzugsweise 1-4 C-Atome und kann weitere Substituenten enthalten, z.B. -OH, -SO₃^{⊖}, -CO₂H, -SO₂-NH-CO-CH₃.

Bevorzugte Beispiele für R³ sind Methyl, Ethyl.

Eine durch R⁴ dargestellte Alkoxycarbonylgruppe ist beispielsweise -COOCH₃ oder -COOC₂H₅. Eine durch R⁴ dargestellte Carbamoylgruppe ist beispielsweise -CONR₂ (mit R = -CH₃ oder -C₂H₅).

Falls die durch R¹ und R² dargestellten Sulfoalkylgruppen beide in anionischer Form vorliegen, stellt M^{⊕} das zum Ladungsausgleich erforderliche Gegehion dar. M^{⊕} kann beispielsweise bedeuten ein Proton, ein Alkali- oder Erdalkalimetallkation, NH₄^{⊕}, ein organisches Ammoniumion, ein Amidiniumion, ein Guanidiniumion.

Geeignete Beispiele erfindungsgemäßer Sensibilisierungsfarbstoffe der Formel I sind in Tabelle 1 aufgeführt. Geeignete Beispiele erfindungsgemäßer Sensibilisierungsfarbstoffe der Formel II sind in Tabelle 2 aufgeführt.

In den Tabellen 1 und 2 bedeuten:
- Me: = Methyl
- Et: = Ethyl
- SP: = -(CH₂)₃-SO₃^{⊖}
- SEt: = -(CH₂)₂-SO₃^{⊖}
- SBu: = -(CH₂)₄-SO₃^{⊖}
- iSBu: = -(CH₂)₂-CHMe-SO₃^{⊖}
- Sₘₐₓ: = Sensibilisierungsmaximum

**Tabelle 1**

| | R¹ | R² | R³ | R⁴ | Sₘₐₓ [nm] |
|---|---|---|---|---|---|
| 1 | Sp | Sp | Et | H | 555 |
| 2 | Sp | SEt | Et | H | 555 |
| 3 | Sp | SBu | Me | H | 552 |
| 4 | Sp | iSBu | Me | H | 553 |
| 5 | Sp | Sp | Me | H | 553 |
| 6 | SBu | Sp | Et | H | 554 |
| 7 | iSBu | Sp | Et | H | 556 |
| 8 | Sp | Sp | Et | Cl | 578 |
| 9 | Sp | iSBu | Et | Cl | 580 |
| 10 | Sp | SEt | Me | Cl | 576 |
| 11 | Sp | iSBu | Me | Cl | 577 |
| 12 | Sp | SBu | Et | Cl | 578 |
| 13 | Sp | Sp | Me | Cl | 576 |
| 14 | iSBu | Sp | Et | Cl | 577 |
| 15 | SBu | Sp | Et | Cl | 578 |

**Tabelle 2**

| | R¹ | R² | R³ | R⁴ | R⁵ | Sₘₐₓ[nm] |
|---|---|---|---|---|---|---|
| 1 | Sp | Sp | Et | Cl | CN | 572 |
| 2 | Sp | Sp | Me | Cl | CN | 569 |
| 3 | Sp | SEt | Me | Cl | CN | 568 |
| 4 | Sp | SEt | Et | Cl | CN | 570 |
| 5 | Sp | iSBu | Me | Cl | CN | 569 |
| 6 | Sp | SBu | Et | Cl | CN | 573 |
| 7 | SBu | Sp | Et | Cl | CN | 572 |
| 8 | iSBu | Sp | Me | Cl | CN | 569 |
| 9 | SBu | SEt | Me | Cl | CN | 568 |
| 10 | Sp | Sp | Et | Cl | Cl | 560 |
| 12 | Sp | SBu | Et | Cl | Cl | 562 |
| 13 | Sp | iSBu | Me | Cl | Cl | 558 |
| 14 | SBu | Sp | Et | Cl | Cl | 562 |

Die Synthese der erfindungsgemäßen Sensibilisierungsfarbstoffe erfolgt nach an sich bekannten Methoden wie nachfolgend am Beispiel der Synthese des Farbstoffes I-1 dargestellt.

### Synthese des Farbstoffes I-1

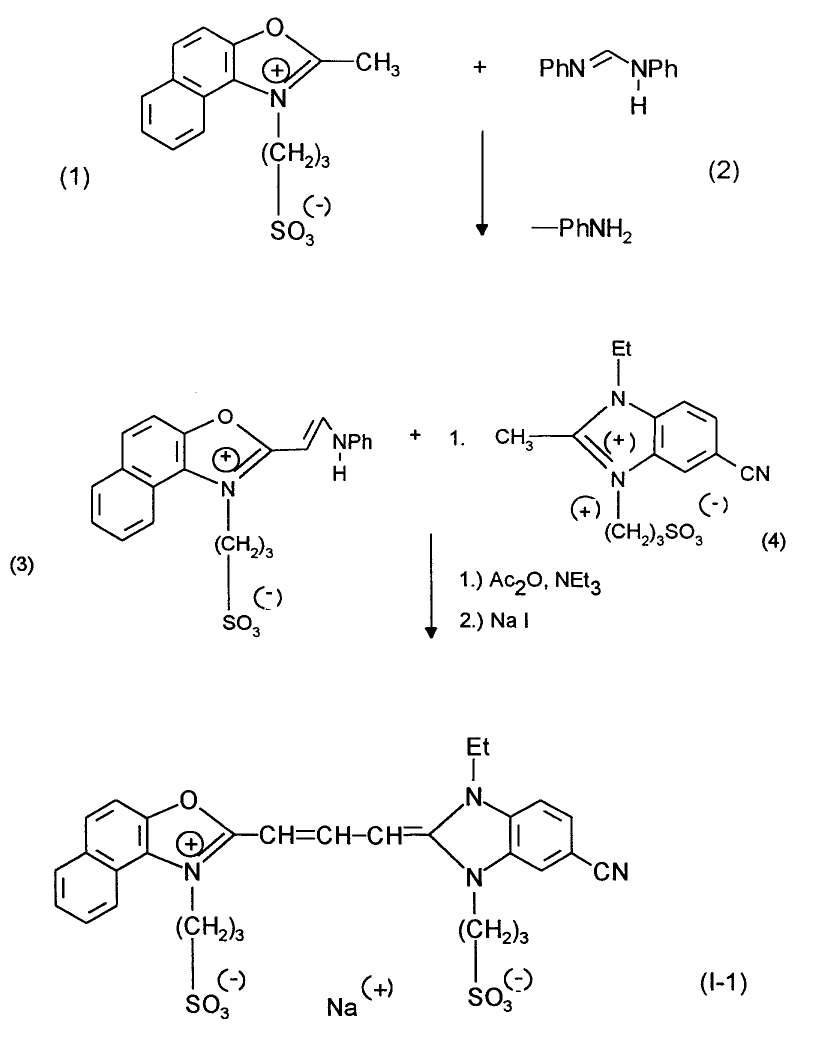

### Herstellung der Verbindung (3)

183 g (0,6 mol) der Verbindung (1) werden unter N₂-Atmosphäre in 300 ml m-Kresol digeriert, mit 153 g (0,79 mol) Diphenylformamid (Verbindung (2)) versetzt und 0.45 h bei 130°C gerührt. Man läßt auf Raumtemperatur abkühlen, versetzt mit 300 ml Ethanol, saugt ab, wäscht mit Ethanol und kocht den Rückstand mit 1,5 l Ethanol aus. Nach Absaugen und waschen des Rückstandes mit EtOH wird getrocknet. Ausbeute 215,1 g der Verbindung (3) (87,8 % d.Th.).

### Herstellung des Sensibilisierungsfarbstoffes I-1

12.24 g (30 mmol) der Verbindung (3) werden in 150 ml DMF unter N₂-Atmosphäre digeriert, mit 75 ml Acetanhydrid und dann mit 15 ml Triethylamin versetzt und 10 min bei Raumtemperatur gerührt. Nach Zugabe von 9,22 g (30 mmol) der Verbindung (4) läßt man 2 h bei 72-73°C rühren.

Der Farbstoff kristallisiert beim Abkühlen aus. Nach Absaugen und Waschen mit DMF wird der Rückstand heiß in 1 l Methanol gelöst und mit 14,9 g (0,1 mol) Na I in 50 ml Methanol gelöst zugegeben. Der Farbstoff kristallisiert beim Abkühlen aus. Nach Absaugen, waschen mit Methanol wird mit 1 l Methanol 2 h ausgekocht. Absaugen mit Methanol, Waschen und Trocknen führt zu 10,35 g des Sensibilisierungsfarbstoffes I-1(53,5% d. Th.).

Das als lichtempfindlicher Bestandteil in dem erfindungsgemäßen fotografischen Aufzeichnungsmaterial befindliche Silberhalogenid kann als Halogenid Chlorid, Bromid oder Iodid bzw. Mischungen davon enthalten. Beispielsweise kann der Halogenidanteil wenigstens einer Schicht zu 0 bis 15 mol-% auf Iodid, zu 0 bis 100 mol-% aus Chlorid und zu 0 bis 100 mol-% aus Bromid bestehen. Im Falle von Farbnegativ- und Farbumkehrfilmen werden üblicherweise Silberbromidiodidemulsionen, im Falle von Farbnegativ- und Farbumkehrpapier üblicherweise Silberchloridbromidemulsionen mit hohem Chloridanteil bis zu reinen Silberchloridemulsionen verwendet. Es kann sich um überwiegend kompakte Kristalle handeln, die z.B. regulär kubisch oder oktaedrisch sind oder Übergangsformen aufweisen können. Vorzugsweise können aber auch plättchenförmige Kristalle vorliegen, deren durchschnittliches Verhältnis von Durchmesser zu Dicke bevorzugt wenigstens 5:1 ist, wobei der Durchmesser eines Kornes definiert ist als der Durchmesser eines Kreises mit einem Kreisinhalt entsprechend der projizierten Fläche des Kornes. Die Schichten können aber auch tafelförmige Silberhalogenidkristalle aufweisen, bei denen das Verhältnis von Durchmesser zu Dicke wesentlich größer als 5:1 ist, z.B. 12:1 bis 30:1.

Die Silberhalogenidkörner können auch einen mehrfach geschichteten Kornaufbau aufweisen, im einfachsten Fall mit einem inneren und einem äußeren Kornbereich (core/shell), wobei die Halogenidzusammensetzung und/oder sonstige Modifizierungen, wie z.B. Dotierungen der einzelnen Kornbereiche unterschiedlich sind. Die mittlere Korngröße der Emulsionen liegt vorzugsweise zwischen 0,2 µm und 2,0 µm, die Komgrößenverteilung kann sowohl homo- als auch heterodispers sein. Homodisperse Korngrößenverteilung bedeutet, daß 95 % der Körner nicht mehr als ± 30 % von der mittleren Krongröße abweichen.

Es können zwei oder mehrere Arten von Silberhalogenidemulsionen, die getrennt hergestellt werden, als Mischung verwendet werden.

Die fotografischen Emulsionen können nach verschiedenen Methoden (z. B. P. Glatkides, Chimie et Physique Photographique, Paul Montel, Paris (1967), G.F. Duffin, Photographic Emulsion Chemistry, The Focal Press, London (1966), V.L. Zelikman et al., Making and Coating Photographic Emulsion, The Focal Press, London (1966) aus löslichen Silbersalzen und löslichen Halogeniden hergestellt werden.

Die Fällung des Silberhalogenids erfolgt bevorzugt in Gegenwart des Bindemittels, z.B. der Gelatine und kann im sauren, neutralen oder alkalischen pH-Bereich durchgeführt werden, wobei vorzugsweise Silberhalogenidkomplexbildner zusätzlich verwendet werden. Zu letzteren gehören z.B. Ammoniak, Thioether, Imidazol, Aminoniumthiocyanat oder überschüssiges Halogenid. Die Zusammenführung der wasserlöslichen Silbersalze und der Halogenide erfolgt wahlweise nacheinander nach dem single-jet- oder gleichzeitig nach dem double-jet-Verfahren oder nach beliebiger Kombination beider Verfahren. Bevorzugt wird die Dosierung mit steigenden Zuflußraten, wobei die "kritische" Zufuhrgeschwindigkeit, bei der gerade noch keine Neukeime entstehen, nicht überschritten werden sollte. Der pAg-Bereich kann während der Fällung in weiten Grenzen variieren, vorzugsweise wird das sogenannte pAg-gesteuerte Verfahren benutzt, bei dem ein bestimmter pAg-Wert konstant gehalten oder ein definiertes pAg-Profil während der Fällung durchfahren wird. Neben der bevorzugten Fällung bei Halogenidüberschuß ist aber auch die sogenannte inverse Fällung bei Silberionenüberschuß möglich. Außer durch Fällung können die Silberhalogenidkristalle auch durch physikalische Reifung (Ostwaldreifung), in Gegenwart von überschüssigem Halogenid und/oder Silberhalogenidkomplexierungsmitteln wachsen. Das Wachstum der Emulsionskörner kann sogar überwiegend durch Ostwaldreifung erfolgen, wobei vorzugsweise eine feinkörnige, sogenannte Lippmann-Emulsion, mit einer schwerer löslichen Emulsion gemischt und auf letzterer umgelöst wird.

Während der Fällung und/oder der physikalischen Reifung der Silberhalogenidkörner können auch Salze oder Komplexe von Metallen, wie Cd, Zn, Pb, Tl, Bi, Ir, Rh, Fe vorhanden sein.

Nach abgeschlossener Kristallbildung oder auch schon zu einem früheren Zeitpunkt werden die löslichen Salze aus der Emulsion entfernt, z.B. durch Nudeln und Waschen, durch Flocken und Waschen, durch Ultrafiltration oder durch Ionenaustauscher.

Die Silberhalogenidemulsion wird im allgemeinen einer chemischen Sensibilisierung unter definierten Bedingungen - pH, pAg, Temperatur, Gelatine-, Silberhalogenid- und Sensibilisatorkonzentration - bis zum Erreichen des Empfindlichkeits- und Schleieroptimums unterworfen. Die Verfahrensweise ist z.B. bei H. Frieser "Die Grundlagen der Photographischen Prozesse mit Silberhalogeniden" Seite 675-734, Akademische Verlagsgesellschaft (1968) beschrieben.

Dabei kann die chemische Sensibilisierung unter Zusatz von Verbindungen von Schwefel, Selen, Tellur und/oder Verbindungen der Metalle der VIII. Nebengruppe des Periodensystems (z.B. Gold, Platin, Palladium, Iridium) erfolgen, weiterhin können Thiocyanatverbindungen, oberflächenaktive Verbindungen, wie Thioether, heterocyclische Stickstoffverbindungen (z.B. Imidazole, Azaindene) oder auch spektrale Sensibilisatoren (beschrieben z.B. bei F. Hamer "The Cyanine Dyes and Related Compounds", 1964, bzw. Ullmanns Encyclopädie der technischen Chemie, 4. Auflage, Bd. 18, S. 431 ff. und Research Disclosure 17643 (Dez. 1978), Kapitel III) zugegeben werden. Ersatzweise oder zusätzlich kann eine Reduktionssensibilisierung unter Zugabe von Reduktionsmitteln (Zinn-II-Salze, Amine, Hydrazinderivate, Aminoborane, Silane, Formamidinsulfinsäure) durch Wasserstoff, durch niedrigen pAg (z.B. Kleiner 5) und/oder hohen pH (z.B. über 8) durchgeführt werden.

Die fotografischen Emulsionen können Verbindungen zur Verhinderung der Schleierbildung oder zur Stabilisierung der fotografischen Funktion während der Produktion, der Lagerung oder der fotografischen Verarbeitung enthalten.

Besonders geeignet sind Azaindene, vorzugsweise Tetra- und Pentaazaindene, insbesondere solche, die mit Hydroxyl- oder Aminogruppen substituiert sind. Derartige Verbindungen sind z.B. von Birr, Z. Wiss. Phot. 47 (1952), S. 2-58 beschrieben worden. Weiter können als Antischleiermittel Salze von Metallen wie Quecksilber oder Cadmium, aromatische Sulfon- oder Sulfinsäuren wie Benzolsulfinsäure, oder stickstoffhaltige Heterocyclen wie Nitrobenzimidazol, Nitroindazol, gegebenenfalls substituierte Benzthiazoliumsalze eingesetzt werden. Besonders geeignet sind Mercaptogruppen enthaltende Heterocyclen, z.B. Mercaptobenzthiazole, Mercaptobenzimidazole, Mercaptotetrazole, Mercaptothiadiazole, Mercaptopyrimidine, wobei diese Mercaptoazole auch eine wasserlöslichmachende Gruppe, z.B. eine Carboxylgruppe oder Sulfogruppe, enthalten können. Weitere geeignete Verbindungen sind in Research Disclosure 17 643 (Dez. 1978), Kapitel VI, veröffentlicht.

Die Stabilisatoren können den Silberhalogenidemulsionen vor, während oder nach deren Reifung zugesetzt werden. Selbstverständlich kann man die Verbindungen auch anderen fotografischen Schichten, die einer Halogensilberschicht zugeordnet sind, zusetzen.

Es können auch Mischungen aus zwei oder mehreren der genannten Verbindungen eingesetzt werden.

Mindestens eine lichtempfindliche Silberhalogenidemulsionsschicht des erfindungsgemäßen fotografischen Materials ist mit einem oder mehreren der Sensibilisierungsfarbstoffe einer der Formeln I und II spektral sensibilisiert. Die Zugabe des Farbstoffes zur zu sensibilisierenden Emulsion kann nach deren Herstellung oder aber auch während jeder Phase der Herstellung erfolgen, z.B. während der Fällung oder der physikalischen Reifung des Silberhalogenids. Die Zugabe erfolgt in der Regel in gelöster Form, z.B. in Form einer Lösung des Farbstoffes in Wasser, Methanol, Ethanol oder Mischungen davon. Der Farbstoff kann aber auch in feinverteilter Form, z.B. als Farbstoffdispergat zugesetzt werden.

Mit den erfindungsgemäßen Sensibilisierungsfarbstoffen wird nicht nur eine hohe, vor allem aber eine stabile Sensibilisierung im grünen Spektralbereich zwischen 550 und 580 nm erzielt. Die erfindungsgemäßen Farbstoffe eignen sich daher besonders für die Spektralsensibilisierung von grünempfindlichen Schichten farbfotografischer Materialien.

Zu noch höheren Empfindlichkeiten gelangt man durch Zumischen eines Sensibilisierungsfarbstoffes der allgemeinen Formel III 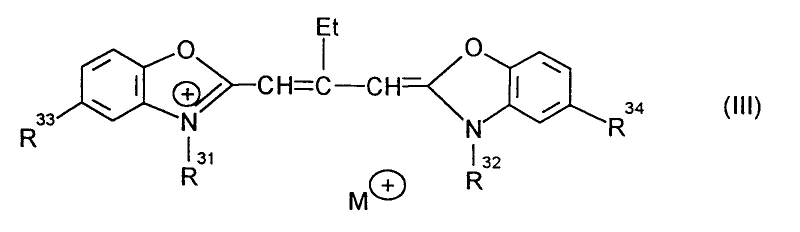
worin bedeuten
- R³¹, R³²: Reste wie R¹ und R²;
- R³³, R³⁴: Chlor, Phenyl;
- M^{⊕}: ein gegebenenfalls zum Ladungsausgleich erforderliches Gegenion (Kation).

Geeignete Beispiele für Sensibilisierungsfarbstoffe der Formel III sind (Ph = Phenyl):

III-1: R³³ = R³⁴ = Ph, R³¹ = R³² = -(CH₂)₂-SO₃^{⊖}

III-2: R³³ = R³⁴ = Ph, R³¹ = R³² = -(CH₂)₃-SO₃^{⊖}

III-3: R³³ = R³⁴ = Ph, R³¹ = R³² = -(CH₂)₂-CHMe-SO₃^{⊖}

III-4: R³³ = Cl, R³⁴ = Ph, R³¹ = -(CH₂)₃-SO₃^{⊖}, R³² = -(CH₂)₂-SO₃^{⊖},

III-5: R³³ = Cl, R³⁴ = Ph, R³¹ = R³² = -(CH₂)₃-SO₃^{⊖}

III-6: R³³ = Cl, R³⁴ = Ph, R³¹ = -(CH₂)₃-SO₃^{⊖}, R³² = -(CH₂)₂-CHMe-SO₃^{⊖}

Zu ebenfalls höheren Empfindlichkeiten gelangt man, wenn man zwei oder mehr Sensibilisierungsfarbstoffe einer der allgemeinen Formeln I und II in Kombination miteinander verwendet, wobei die verschiedenen Farbstoffe entweder im Gemisch miteinander oder nacheinander eingesetzt werden können. Insbesondere kann man zwei Farbstoffe der Formel I oder je einen Farbstoff einer der Formeln I und II miteinander kombinieren.

Darüberhinaus kann ein zusätzlicher und nützlicher Effekt beobachtet werden: Ausbildung perfekter Mischbanden, deren Sensibilisierungsmaxima je nach Mischungsverhältnis und Zugabereihenfolge zur Emulsion in einem Bereich von bis zu 18 nm verschoben werdne können. Mit Hilfe dieser Möglichkeit, das Sensibilisierungsmaximum nach Wunsch zu legen, kann der Hersteller fotografischer Aufzeichnungsmaterialien sich das Sensibilisierungsmaximum so einstellen, daß er neben hoher Empfindlichkeit gute Farbwiedergabe erreicht.

Die allerhöchsten Empfindlichkeiten erreicht man durch Mischung zweier Sensibilisierungsfarbstoffe einer der allgemeinen Formeln I und II mit einem Sensibilisierungsfarbstoff der allgemeinen Formel III.

### Beispiele

### Beispiel 1

Unter Verwendung des Sensibilisierungsfarbstoffes I-8 wurde ein lichtempfindliches farbfotografisches Material hergestellt wie folgt:
Zu 100 g einer Silberbromidemulsion mit 10 % AgI-Anteil (205,6 g AgNO₃ pro Emulsion) mit breiter Korngrößenverteilung und einem Volumenschwerpunkt von 1.41 µm werden nach 45 min Rühren bei 40°C, 20,6 mg des Sensibilisators I-8 (M^{⊕}= HN^{⊕}Et₃) gelöst in 20,6 ml Methanol, gegeben. Nach weiteren 60 min Rühren bei 40°C gibt man 17,7 mg des Stabilisators ST, gelöst in einem Gemisch aus 1,7 g Wasser und 0,053 g 1n NaOH, hinzu. Nach Zugabe von 16,2 ml Wasser hält man noch 10 min bei 40°C, gibt dann unter Rühren 4 g des Kupplers M-1 in 62 g Trikresylphosphat, emulgiert, 100 ml Wasser, 120 ml 5 %ige wäßrige Gelatinelösung und 81 mg des Netzmittels NM, gelöst in einem Gemisch aus 1,6 ml Wasser und 0,4 ml Methanol hinzu. Nach weiteren 15 min wird die Emulsion vergossen und anschließend gehärtet.

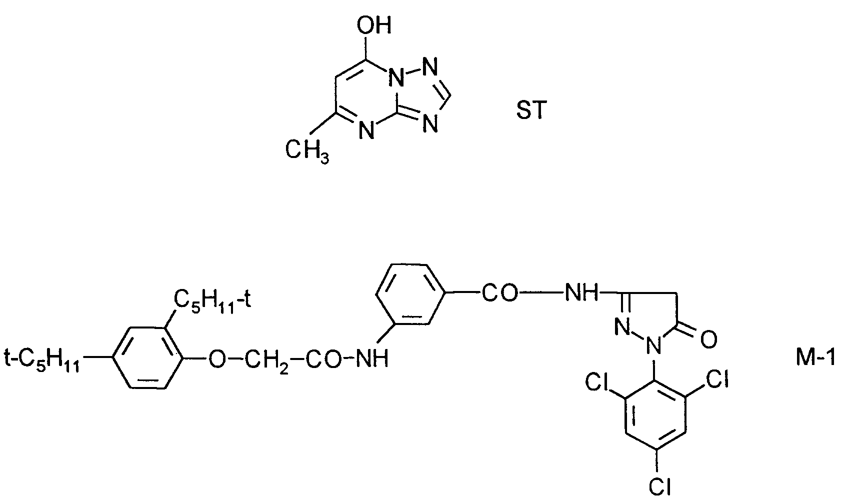

Et₄N^{⊕} C₈F₁₇ SO₃^{⊖} NM

In gleicher Weise wurden weitere Materialien hergestellt mit dem Unterschied, daß anstelle des erfindungsgemäßen Sensibilisierungsfarbstoffes I-8 andere Sensibilisierungsfarbstoffe verwendet wurden, wie aus Tabelle 3 ersichtlich. Von den so hergestellten Materialien wurde die Empflndlichkeit bestimmt, und zwar einmal im frischen Zustand (unmittelbar nach Herstellung) einmal nach Lagerung unter Heizschrankbedingungen (7 d, 60°C, 34 % r.F.) und einmal nach Lagerung unter Tropenschrankbedingungen (7 d, 35°C, 90 % r.F.). Hierzu wurden frische bzw. entsprechen gelagerte Proben der Materialien hinter einem Verlaufskeil belichtet und einer Colornegativverarbeitung unterworfen, wie in "The Journal of Photographie Science, 1974, Seiten 597 und 598 beschrieben. Die Ergebnisse sind in Tabelle 3 zusammengestellt.
Vergleichsfarbstoff A = Farbstoff III-A aus JP 60-108 838
Vergleichsfarbstoff B = Farbstoff III-1 aus JP 60-128 433.

Aus Tabelle 3 geht hervor, daß die Frischempfindlichkeiten von I-1 bzw. I-8 höher sind als die der bekannten Sensibilisierungsfarbstoffe A und B.

Weiterhin kann aus der Tabelle entnommen werden, daß I-1, I-8, II-1 und II-10 bei Lagerung unter feucht-warmen Bedingungen weniger in ihren Empfindlichkeiten nachlassen, also stabiler sind als die bekannten Sensibilisierungsfarbstoffe A und B.

**Tabelle 3**

| | der frischen Probe | Empfindlichkeit | |
|---|---|---|---|
| | | nach Lagerung | |
| | | 7d, 60°C, 34 % r.F. | 7d, 35°C, 90 % r.F. |
| I-1 | 41.8 | 40.7 | 39.5 |
| I-8 | 42.5 | 41.6 | 40.7 |
| II-1 | 39.5 | 39.1 | 38.1 |
| II-10 | 39.3 | 38.3 | 37.9 |
| A | 40.0 | 34.7 | 29.1 |
| B | 40.8 | 40.1 | 37.2 |

### Beispiel 2

Wie in Beispiel 1 beschrieben, wurden die Frischempfindlichkeiten von entsprechen hergestellten Materialien bestimmt, die zusätzlich mit einem Sensibilisierungsfarbstoff der allgemeinen Formel III sensibilisiert waren. Der Farbstoff der Formel III wurde in der gleichen Menge verwendet wie der Farbstoff der Formel I bzw. II oder der Vergleichsfarbstoff. Mit jedem Farbstoffpaar wurde die gleiche Oberflächenbedeckung erzielt wie in Beispiel 1. Die erzielten Frischempfindlichkeitswerte sind in den Tabellen 4 und 5 dargestellt. Die jeweils in der oberen Reihe angegebenen Farbstoffe wurden der Emulsion zuerst zugesetzt.

**Tabelle 4**

| | Frischempfindlichkeit | | | | |
|---|---|---|---|---|---|
| | III-3 | III-5 | III-1 | III-6 | III-4 |
| B | 40.1 | 40.3 | 40.0 | 40.2 | 40.5 |
| A | 39.1 | 39.5 | 38.9 | 39.3 | 39.2 |
| II-1 | 41.7 | 41.5 | 40.7 | 41.5 | 41.1 |
| I-1 | 41.6 | 42.0 | 42.0 | 42.2 | 42.1 |
| I-8 | 42.2 | 42.6 | 42.3 | 42.5 | 42.3 |

**Tabelle 5**

| | Frischempfindlichkeit | | | | |
|---|---|---|---|---|---|
| | B | A | II-1 | I-1 | I-8 |
| III-3 | 39.9 | 39.2 | 41.6 | 41.8 | 42.4 |
| III-5 | 40.2 | 39.9 | 40.9 | 42.7 | 42.7 |
| III-1 | 40.1 | 39.0 | 41.8 | 41.9 | 42.5 |
| III-6 | 40.4 | 39.1 | 41.6 | 42.2 | 42.6 |
| III-4 | 40.5 | 39.4 | 41.8 | 42.3 | 42.5 |

### Beispiel 3

Wie in Beispiel 1 beschrieben, wurden die Frischempfindlichkeitswerte von entsprechend hergestellten Materialien bestimmt, die mit einem Gemisch zweier Sensibilisierungsfarbstoffe einer der Formeln I und II sensibilisiert waren, wobei die Farbstoffe in verschiedenen Mischungsverhältnissen eingesetzt wurden. Mit jedem Farbstoffpaar wurde die gleiche Oberflächenbedeckung erzielt wie in Beispiel 1. Die Ergebnisse sind in Tabelle 6 dargestellt. Der in der oberen Reihe jeweils zuerst genannte Farbstoff wird der Emulsion als erster zugesetzt. In Tabelle 6 sind auch die jeweils erzielten Sensibilisierungsmaxima angegeben. Es ist ersichtlich, daß durch Variation des Mischungsverhältnisses die Lage des Sensibilisierungsmaximums in einem weiten Bereich ohne wesentliche Beeinträchtigung der Empfindlichkeit variiert werden kann.

**Tabelle 6**

| Frischempfindlichkeit und Sensibilisierungsmaximum | | | | | | | | |
|---|---|---|---|---|---|---|---|---|
| | I-1/II-1 | | II-1/I-1 | | I-1/I-8 | | I-8/I-1 | |
| Mischungs-Verhältnis | E | Sₘₐₓ [nm] | E | Sₘₐₓ [nm] | E | Sₘₐₓ [nm] | E | Sₘₐₓ [nm] |
| 1/5 | 42.2 | 575 | 42.6 | 557 | 42.2 | 570 | 42.5 | 560 |
| 1/4 | 42.4 | 575 | 42.7 | 557 | 42.6 | 570 | 42.2 | 560 |
| 1/3 | 42.2 | 575 | 42.6 | 560 | 42.3 | 570 | 42.3 | 562 |
| 1/2 | 42.5 | 570 | 42.8 | 565 | 42.2 | 570 | 42.3 | 567 |
| 1/1 | 42.8 | 565 | 42.9 | 570 | 42.4 | 565 | 42.3 | 570 |

### Beispiel 4

Wie in Beispiel 1 beschrieben, wurden die Frischempfindlichkeitswerte von entsprechend hergestellten Materialien bestimmt, die mit einem Farbstofftripel, bestehend aus zwei Farbstoffen einer der Formeln I und II und einem Farbstoff der Formel III, sensibilisiert wurden. Mit jedem Farbstofftripel wurde die gleiche Oberflächenbedeckung erzielt wie in Beispiel 1. In Tabelle 7 sind für verschiedene Mischungsverhältnisse der in den Farbstofftripeln verwendeten Sensibilisierungsfarbstoffe die erzielten Empfindlichkeitswerte angegeben. Die in der oberen Reihe angegebene Reihenfolge der Farbstoffe entspricht auch der Reihenfolge der Zugabe zur Emulsion.

**Tabelle 7**

| Frischempfindlichkeit | | | | | | | | | | | |
|---|---|---|---|---|---|---|---|---|---|---|---|
| III-6/I-8/I-1 | | I-8/I-1/III-6 | | III-4/I-8/I-1 | | I-8/I-1/III-4 | | III-4/II-1/I-1 | | II-1/I-1/III-4 | |
| Mischungs-Verhältnis | E | Mischungs-Verhältnis | E | Mischungs-Verhältnis | E | Mischungs-Verhältnis | E | Mischungs-Verhältnis | E | Mischungs-Verhältnis | E |
| 1/1/5 | 43.0 | 1/1/1 | 42.9 | 1/1/5 | 42.4 | 1/1/1 | 43.3 | 1/1/5 | 42.4 | 1/1/1 | 43.3 |
| 1/1/4 | 42.9 | 1/2/1 | 43.0 | 1/1/4 | 42.9 | 1/2/1 | 42.4 | 1/1/4 | 42.9 | 1/2/1 | 42.4 |
| 1/1/3 | 42.8 | 1/3/1 | 42.9 | 1/1/3 | 43.3 | 1/3/1 | 43.5 | 1/1/3 | 43.3 | 1/3/1 | 43.5 |
| 1/1/2 | 42.7 | 1/4/1 | 43.3 | 1/1/2 | 42.8 | 1/4/1 | 42.8 | 1/1/2 | 42.8 | 1/4/1 | 42.8 |
| 1/1/1 | 42.6 | 1/5/1 | 42.7 | 1/1/1 | 42.7 | 1/5/1 | 42.5 | 1/1/1 | 42.7 | 1/5/1 | 42.5 |

## Patentansprüche

1. Lichtempfindliches fotografisches Aufzeichnungsmaterial mit mindestens einer lichtempfindlichen Silberhalogenidemulsionsschicht, die mit einem einen Naphthoxazolkern und einen Benzimidazolkern enthaltenden Carbocyaninfarbstoff spektral sensibilisiert ist, dadurch gekennzeichnet, daß die Silberhalogenidemulsionsschicht mit mindestens einem Sensibilisierungsfarbstoff einer der Formeln I und II spektral sensibilisiert ist 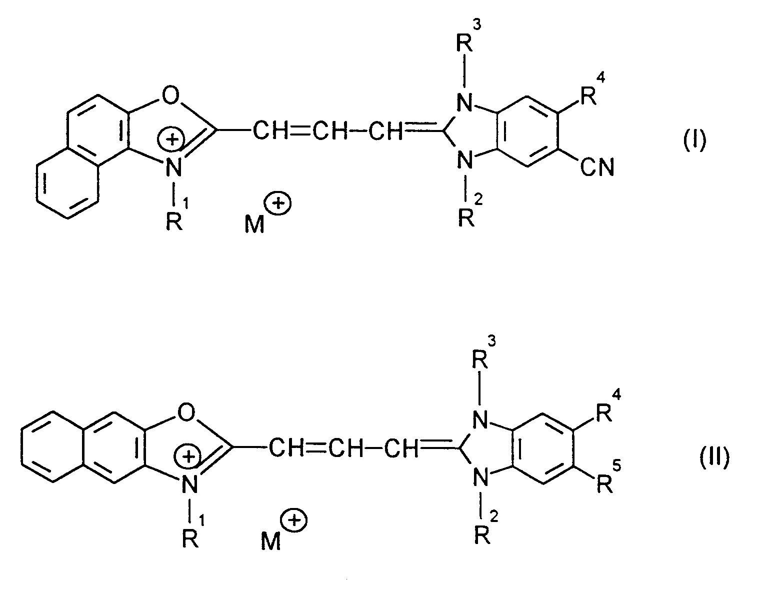 worin bedeuten
R¹, R² Sulfoalkyl;
R³ Alkyl;
R⁴ H, F, Cl, -CN, Alkoxycarbonyl, Carbamoyl;
R⁵ Cl, -CN;
M^{⊕} ein gegebenenfalls zum Ladungsausgleich erforderliches
Gegenion (Kation).

2. Aufzeichnungsmaterial nach Anspruch 1, dadurch gekennzeichnet, daß die Silberhalogenidemulsionsschicht mit mindestens einem Sensibilisierungsfarbstoff einer der Formeln I und II und zusätzlich mit mindestens einem Sensibilisierungsfarbstoff der Formel III spektral sensibilisiert ist 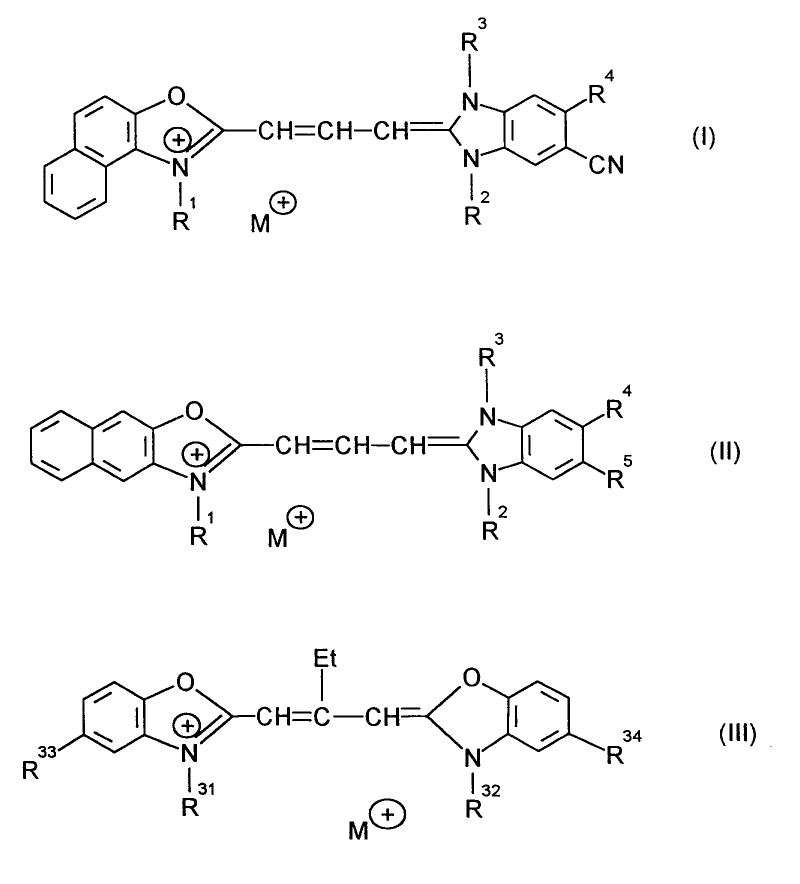 worin bedeuten
R¹, R², R³¹, R³² Sulfoalkyl;
R³ Alkyl;
R⁴ H, F, Cl, -CN, Alkoxycarbonyl, Carbamoyl;
R⁵ Cl, -CN;
R³³, R³⁴ Cl, Phenyl;
M^{⊕} ein gegebenenfalls zum Ladungsausgleich erforderliches Gegenion (Kation).

3. Aufzieichnungsmaterial nach Anspruch 1, dadurch gekennzeichnet, daß die Silberhalogenidemulsionsschicht mit einem Gemisch mindestens zweier Sensibilisierungsfarbstoffe spektral sensibilisiert ist, von denen jeder ausgewählt ist aus der Gruppe von Sensibilisierungsfarbstoffen der Formeln I und II 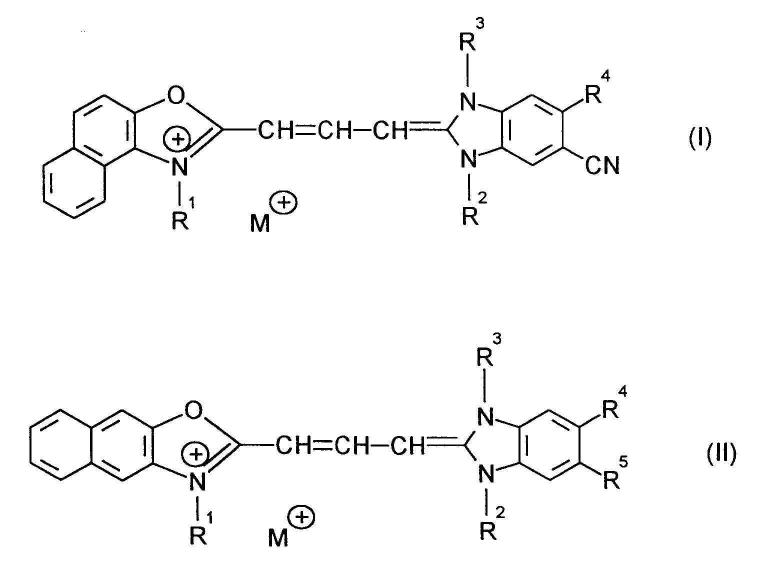 worin bedeuten
R¹, R² Sulfoalkyl;
R³ Alkyl;
R⁴ H, F, Cl, -CN, Alkoxycarbonyl, Carbamoyl;
R⁵ Cl, -CN;
M^{⊕} ein gegebenefalls zum Ladungsausgleich erforderliches Gegenion (Kation).

4. Aufzeichnungsmaterial nach Anspruch 3, dadurch gekennzeichnet, daß die Silberhalogenidemulsionsschicht zusätzlich einen Sensibilisierungsfarbstoff der Formel III enthält 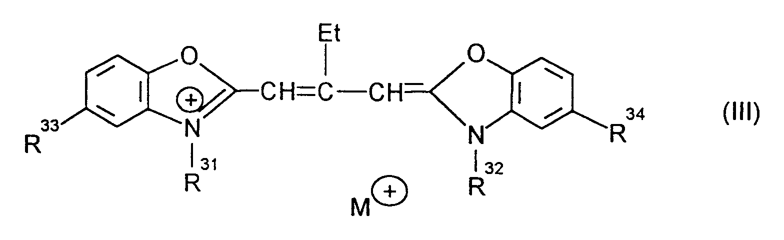 worin bedeuten
R³¹, R³² Sulfoalkyl;
R³³, R³⁴ Cl, Phenyl;
M^{⊕} ein gegebenenfalls zum Ladungsausgleich erforderliches Gegenion (Kation).

5. Farbstoff der Formel I 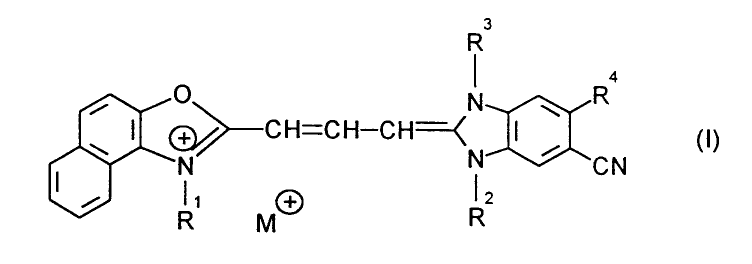 worin bedeuten
R¹, R² -(CH₂)₂-SO₃^{⊖}, -(CH₂)₃-SO₃^{⊖}, -(CH₂)₄-SO₃^{⊖}, -(CH₂)₂-CHCH₃SO₃^{⊖};
R³ Methyl, Ethyl;
R⁴ H, Cl;
M^{⊕} ein gegebenenfalls zum Ladungsausgleich erforderliches Gegenion (Kation).
